# FASCICULE DE BREVET EUROPEEN

(11) **EP 4 097 343 B1**
(45) Date de publication et mention de la délivrance du brevet: **04.03.2026**
(21) Numéro de dépôt: 21719700.3
(22) Date de dépôt: 15.01.2021
(51) Int. Cl.: F02C 7/236, F02C 7/26, F02C 9/30, F02C 7/22, F04D 29/32

(54) **CIRCUIT D'ALIMENTATION EN CARBURANT D'UN MOTEUR D'AERONEF**
KRAFTSTOFFVERSORGUNGSKREIS EINES FLUGZEUGTRIEBWERKS
FUEL SUPPLY CIRCUIT OF AN AIRCRAFT ENGINE

(30) Priorité: 27.01.2020 FR 2000765
(43) Date de publication de la demande: 07.12.2022
(73) Titulaire: Safran Helicopter Engines, 64510 Bordes (FR)
(72) Inventeur: DUPEU, Franck, Albert, Robert, 77550 MOISSY-CRAMAYEL (FR); GIGON, Jean-Marie, André, Robert, 77550 MOISSY-CRAMAYEL (FR); TAIEB, David, Simon, Serge, 77550 MOISSY-CRAMAYEL (FR)
(74) Mandataire: Cabinet Beau de Loménie
(86) Numéro de dépôt international: PCT/FR2021/050076
(87) Numéro de publication internationale: WO 2021/152230

(56) Documents cités:
- EP-A2- 2 088 302
- FR-A1- 2 983 248
- US-A1- 2010 130 327
- US-A1- 2014 219 826

## Description

### Domaine Technique

La présente invention concerne le domaine des turbomachines du type comprenant un corps rotatif comprenant un arbre moteur délivrant une puissance mécanique. L'invention s'applique à tout type de turbomachines, en particulier celles utilisées dans les aéronefs comme les turboréacteurs, turbopropulseurs, et turbomachines à soufflantes non carénées, aussi connues sous le vocable anglo-saxon de « Open Rotor ».

### Technique antérieure

Une turbomachine conventionnelle comporte de manière connue un ou plusieurs corps rotatifs. Chaque corps rotatif comprend un compresseur, une turbine et un arbre moteur reliant la turbine au compresseur pour entraîner le compresseur en rotation. Une partie de la puissance générée par la turbomachine est utilisée pour entraîner différents accessoires (ou machines auxiliaires), nécessaires au fonctionnement du turboréacteur ou de l'aéronef, tels que par exemple une pompe de lubrification ou une pompe à carburant.

A cet effet, la turbomachine comprend généralement une boîte d'engrenage d'accessoires (Accessory Gear Box) reliant l'arbre moteur aux pompes. Lorsque l'arbre moteur est entraîné en rotation, la boîte d'engrenage d'accessoires transmet le mouvement de rotation aux différents accessoires. En d'autres termes, l'énergie mécanique produite par l'arbre moteur est transmise aux pompes par la boîte d'engrenage d'accessoires.

Cette solution technique présente toutefois des inconvénients. En effet, la vitesse de rotation de la ou des pompes est dépendante de la vitesse de rotation de l'arbre moteur, la ou les pompes ne pouvant alors pas être pilotées selon un régime moteur indépendant. Cela peut être problématique lorsqu'il s'agit par exemple du circuit d'alimentation en carburant de la turbomachine. En effet, le débit de la ou les pompes présentes dans le circuit d'alimentation est dépendant du régime moteur, ce qui ne permet pas toujours d'optimiser le débit de carburant au besoin du moteur en particulier lors du démarrage de la turbomachine.

Le document FR 2 983 248 A1 décrit une turbomachine comportant une pompe d'alimentation en carburant et un dispositif électrique montés sur un même arbre de pompage. Le document EP 2 088 302 A2 et le document US 2014/219826 A1 décrivent un système d'alimentation en carburant comprenant deux pompes. Le document US 2010/130327 A1 décrit une pompe multi-entraînement.

### Exposé de l'invention

L'invention a notamment pour but de fournir une turbomachine ne présentant pas les inconvénients précités.

Ce but est atteint grâce à un circuit d'alimentation en carburant d'un moteur d'aéronef comprenant au moins une pompe centrifuge couplée mécaniquement avec un arbre moteur délivrant une puissance mécanique, caractérisé en ce qu'il comprend en outre au moins une pompe électromagnétique comprenant au moins un stator délimitant un volume interne annulaire dans lequel est présent un rotor apte à entraîner un fluide, une pluralité d'aimants répartis de manière annulaire sur le rotor et au moins une pluralité de bobines réparties de manière annulaire à l'intérieur du stator en vis-à-vis des aimants et en ce que le rotor est relié à l'arbre moteur par un élément d'embrayage unidirectionnel. Le couplage sélectif d'une pompe électromagnétique avec une pompe centrifuge dans le circuit d'alimentation en carburant de l'invention permet d'apporter de nouvelles fonctionnalités tout en conservant un niveau de fiabilité élevée. La pompe électromagnétique étant alimentée avec une source d'énergie électrique indépendante de l'énergie mécanique fournie à l'arbre moteur lorsque que la turbomachine est démarrée, elle peut être avantageusement utilisée pour remplir le circuit de carburant (amorçage) avant le démarrage du moteur. Le débit de carburant peut également être ajusté par la pompe électromagnétique, et ce indépendamment du régime moteur, ce qui permet un pilotage du débit au plus près du besoin en carburant tout en limitant la recirculation du carburant.

Selon une caractéristique particulière du circuit de l'invention, le rotor comprend une roue munie d'une pluralité d'aubes, les aimants de la pluralité d'aimants étant maintenus au niveau des extrémités radialement externes des aubes de la roue, les bobines de la pluralité de bobines étant en vis-à-vis des aimants de la pluralité d'aimants suivant une direction radiale.

Selon une autre caractéristique particulière du circuit de l'invention, le rotor comprend un pignon intérieur coopérant avec une couronne extérieure à denture intérieure, les aimants de la pluralité d'aimants étant maintenus au niveau de la périphérie externe de la couronne extérieure, les bobines de la pluralité de bobines étant en vis-à-vis des aimants de la pluralité d'aimants suivant une direction radiale.

En plaçant la pluralité d'aimants permanents et la pluralité de bobines en vis-à-vis suivant la direction radiale, on optimise grandement l'encombrement axial de la pompe. On obtient ainsi une pompe très compacte.

Selon une autre caractéristique particulière du circuit de l'invention, le rotor comprend une roue munie d'une pluralité d'aubes, les aimants de la pluralité d'aimants étant maintenus au niveau de la périphérie externe de la roue, les bobines de la pluralité de bobines étant en vis-à-vis des aimants suivant une direction axiale.

Selon une autre caractéristique particulière du circuit de l'invention, le rotor comprend un pignon intérieur coopérant avec une couronne extérieure à denture intérieure, les aimants de la pluralité d'aimants étant maintenus au niveau de la périphérie externe de la couronne extérieure, les bobines de la pluralité de bobines étant en vis-à-vis des aimants suivant une direction axiale.

Selon une autre caractéristique particulière du circuit de l'invention, le rotor comprend un pignon intérieur coopérant avec une couronne extérieure à denture intérieure, les aimants de la pluralité d'aimants étant maintenus sur le pignon intérieur, les bobines de la pluralité de bobines étant en vis-à-vis des aimants suivant une direction axiale.

En plaçant la pluralité d'aimants permanents et la pluralité de bobines en vis-à-vis suivant la direction axiale, on optimise grandement l'encombrement radial de la pompe. On obtient ainsi une pompe très compacte.

Selon encore une autre caractéristique particulière du circuit de l'invention, chaque pompe électromagnétique comprend des première et deuxième pluralités de bobines présentes respectivement d'un côté et de l'autre côté de la roue, ou couronne extérieure, ou pignon intérieur, les bobines des première et deuxième pluralités de bobines étant en vis-à-vis des aimants suivant la direction axiale. Deux pluralités de bobines permettent d'assurer une redondance en cas de panne ou de défaillance d'une pluralité de bobine. La redondance de la pluralité de bobine peut également être utilisée pour doubler la puissance des champs électromagnétiques auxquels sont soumis les aimants permanents.

Selon une autre caractéristique particulière du circuit de l'invention, les aimants de la pluralité d'aimants sont disposés de manière annulaire selon une structure de Halbach. Cette disposition particulière permet d'augmenter le champ magnétique du côté externe du rotor tandis que le champ magnétique du côté interne du rotor est sensiblement annulé. On réduit ainsi la déperdition du champ magnétique, ce qui améliore le pilotage du rotor par les bobines.

Selon une autre caractéristique particulière du circuit de l'invention, chaque pompe électromagnétique est apte à générer un courant électrique. Cela permet de produire et de stocker de l'énergie électrique lorsque la pompe électromagnétique n'est pas utilisée pour du pompage.

L'invention a également pour objet un moteur d'aéronef comportant un circuit d'alimentation en carburant selon l'invention.

L'invention a encore pour objet l'utilisation du circuit d'alimentation en carburant selon l'invention pour l'alimentation en carburant d'un moteur d'aéronef, ledit circuit étant relié à un réservoir de carburant dépourvu de pompe d'amorçage.

### Brève description des dessins

[Fig. 1] La figure 1 est une représentation schématique d'un circuit d'alimentation en carburant d'un moteur d'aéronef à turbine à gaz,
[Fig. 2] La figure 2 est une vue schématique en perspective éclatée d'une pompe électromagnétique conformément à un mode de réalisation de l'invention,
[Fig. 3] La figure 3 est une vue schématique en perspective d'une partie de la pompe électromagnétique de la figure 2,
[Fig. 4] La figure 4 est une vue schématique en perspective éclatée d'une pompe électromagnétique conformément à un autre mode de réalisation de l'invention,
[Fig. 5] La figure 5 est une vue schématique en perspective d'une partie de la pompe électromagnétique de la figure 4,
[Fig. 6] La figure 6 est une vue schématique en perspective éclatée d'une pompe électromagnétique conformément à un autre mode de réalisation de l'invention,
[Fig. 7] La figure 7 est une vue schématique en perspective éclatée d'une pompe électromagnétique conformément à un autre mode de réalisation de l'invention,
[Fig. 8] La figure 8 est une vue schématique en perspective éclatée d'une pompe électromagnétique conformément à un autre mode de réalisation de l'invention,
[Fig. 9] La figure 9 est une vue schématique en perspective éclatée d'une pompe électromagnétique conformément à un autre mode de réalisation de l'invention,
[Fig. 10] La figure 10 représente une disposition annulaire d'aimants permanents suivant une structure d'Halbach.

### Description des modes de réalisation

L'invention s'applique d'une manière générale à toute turbomachine comprenant un corps rotatif comprenant un arbre moteur délivrant une puissance mécanique et au moins une pompe centrifuge couplée mécaniquement avec l'arbre moteur.

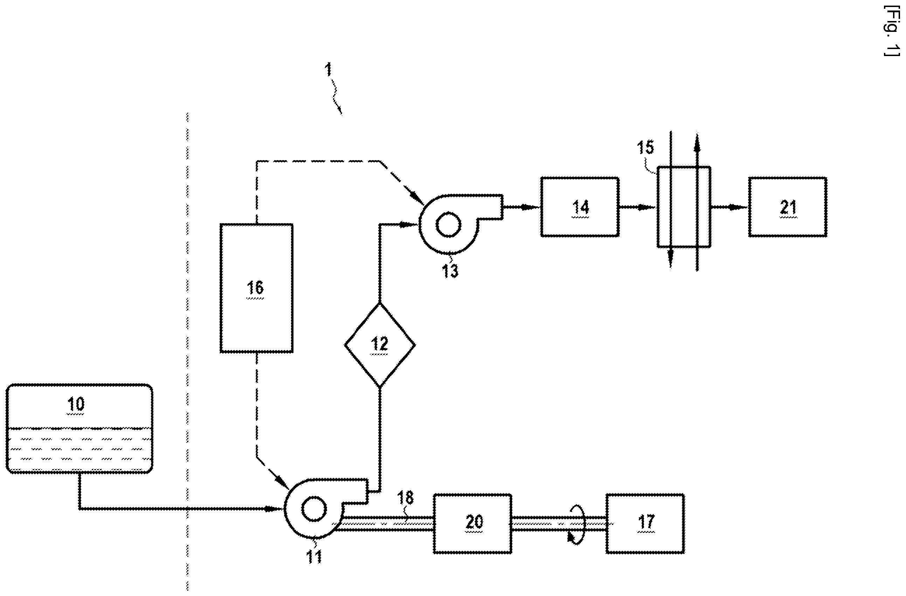

La figure 1 illustre un exemple d'un circuit d'alimentation en carburant 1 qui est décrit dans le cadre d'une application à une turbomachine correspondant à un moteur d'aéronef à turbine à gaz.

Le circuit d'alimentation en carburant 1 relie un réservoir de carburant 10 d'un aéronef à une chambre de combustion 21 d'une turbomachine. Le circuit d'alimentation en carburant 1 est composée ici d'une pompe basse pression 11 reliée au réservoir 10, d'un filtre 12, d'une pompe haute pression 13, d'un dispositif de dosage 14 et d'un échangeur de chaleur huile/carburant 15 relié à la chambre de combustion 21. La turbomachine comprend notamment une boîte d'accessoires 17 (« gear box ») à laquelle est relié un arbre moteur 18 destiné à délivrer une puissance mécanique. La pompe basse pression 11 et la pompe haute pression 13 sont des pompes centrifuges couplées mécaniquement à l'arbre moteur.

Conformément à l'invention, une pompe électromagnétique 20 est en outre associée ici à la pompe centrifuge basse pression 11. La pompe électromagnétique 20 est par exemple du type à anneau liquide ou du type à canal latéral ou régénérative, ou du type gérotor, pilotée de manière indépendante, par exemple, par le calculateur numérique 16 intégré au dispositif de pilotage de la turbomachine. Comme décrit ci-après en détails le rotor de la pompe électromagnétique 20 est relié à l'arbre moteur 18 par un élément d'embrayage unidirectionnel.

La pompe centrifuge basse pression 11 et la pompe électromagnétique 20 sont toutes les deux reliées à la ligne d'alimentation en carburant. Plus précisément, l'entrée des pompes 11 et 20 est reliée au réservoir de carburant 10 tandis que la sortie des pompes 11 et 20 est reliée au filtre 12 de sorte que la turbomachine peut être alimentée en carburant par la pompe centrifuge basse pression 11, ou par la pompe électromagnétique 20, ou par les deux pompes 11 et 20 simultanément.

On décrit maintenant différent modes de réalisation d'une pompe électromagnétique qui peut être utilisée dans la présente invention comme par exemple pour la pompe électromagnétique 20 décrite ci-avant.

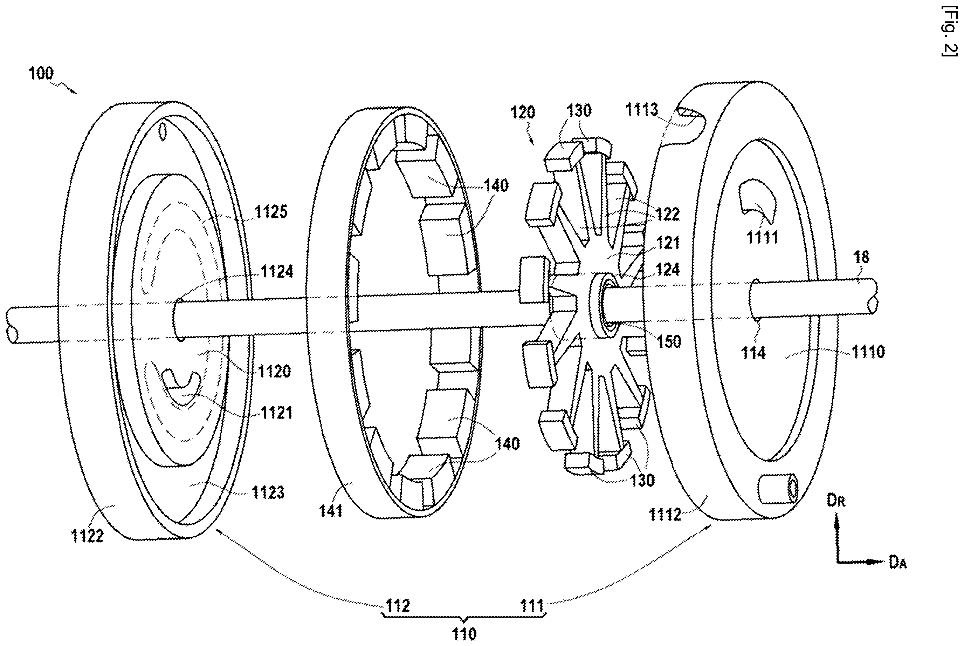

La figure 2 illustre une pompe électromagnétique 100 conformément à un mode de réalisation de l'invention. Dans l'exemple décrit ici, la pompe électromagnétique 100 est une pompe du type à anneau liquide comprenant un corps de pompe fixe ou stator 110 constitué de demi-carter 111 et 112. Le demi-carter 111 et, respectivement 112, comporte une partie centrale cylindrique pleine 1110, respectivement 1120, munie d'un port d'aspiration/refoulement 1111, respectivement 1121, et une paroi externe circulaire 1112, respectivement 1122, s'étendant concentriquement autour de la partie centrale 1110, respectivement 1120. Un logement annulaire 1113, respectivement 1123, est délimité entre la partie centrale 1110, respectivement 1120, et la paroi externe 1112, respectivement 1122.

La pompe électromagnétique 100 comprend également une roue à aubes ou rotor 120 comprenant une roue 121 muni d'une pluralité d'aubes 122 s'étendant depuis la roue suivant une direction radiale D_{R}. La roue à aubes 120 comporte un palier 124. Des ouvertures 1114 et 1124 sont présentes respectivement sur le demi-carter 111 et le demi carter 112. Le palier 1124 est destiné à coopérer avec une roue libre 150 formant ici l'élément d'embrayage unidirectionnel reliant l'arbre moteur 18 à la roue à aubes 120 de la pompe électromagnétique 100, les ouvertures 1114 et 1124 permettant le passage de l'arbre moteur 18.

Dans les pompes de type à anneau liquide, la roue libre 150 est placée de façon excentrique sur la roue à aube 120 par exemple au moyen d'une entretoise (non représentée sur la figure 2) de manière à créer des variations de volume inter-aubes (ou inter-pales) qui permettent d'aspirer le fluide pompé, par exemple par le port 1111 puis de l'évacuer sous pression, par exemple par le port 1121. La pompe 100 peut être également une pompe à canal latéral, encore appelée pompe régénérative. Dans ce cas, un canal latéral 1125 (en pointillés sur la figure 2) présent ici sur le demi-carter 112 s'étend entre les ports 1111 et 1121. L'évolution des variations de volume inter-aubes (ou inter-pales), associée au champ de vitesse (vortex) présent dans le canal latéral 1125, permet d'aspirer le fluide, par exemple par le port 1111, puis de l'évacuer sous pression, par exemple par le port 1121. La pompe électromagnétique 100 comprend encore une pluralité d'aimants permanents 130 répartis de manière annulaire sur la roue à aube ou rotor 120 et une pluralité de bobines 140 réparties de manière annulaire à l'intérieur du corps de pompe fixe ou stator 110. Plus précisément, dans l'exemple décrit ici, les aimants permanents 130 sont maintenus sur les extrémités radialement externes des aubes 122 tandis que les bobines 140 sont maintenues sur la surface interne d'un anneau de support 141, l'ensemble bobines et anneau de support étant présents à la fois dans le logement annulaire 1113 du demi-carter 111 et dans le logement annulaire 1123 du demi-carter 112.

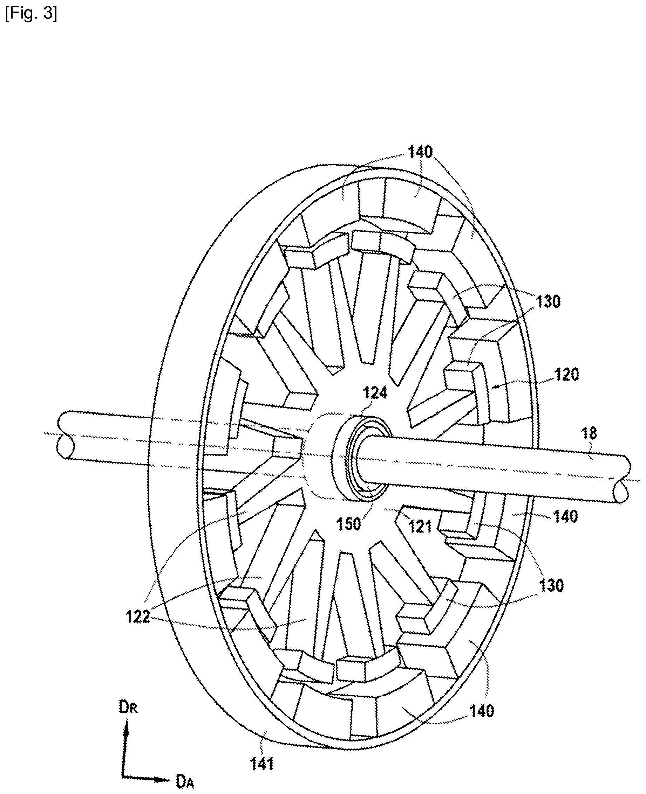

Une fois tous les éléments constitutifs de la pompe 100 assemblés, les aimants permanents 130 se trouvent en vis-à-vis des bobines 140 suivant une direction radiale D_{R} comme illustré sur la figure 3. Le pilotage de la pompe électromagnétique 100 (couple et vitesse de rotation) est réalisé par contrôle du courant circulant dans les bobines.

En fixant les aimants permanents directement 130 sur la roue à aube 120, on intègre une partie des moyens d'entraînement de la pompe directement au sein des éléments en mouvement, ce qui permet d'obtenir un haut niveau d'intégration des moyens d'entraînement et donc un encombrement réduit pour la pompe.

En outre, en plaçant la pluralité d'aimants permanents et la pluralité de bobines en vis-à-vis suivant la direction radiale, on optimise grandement l'encombrement radial de la pompe. On obtient ainsi une pompe très compacte qui peut être pilotée de manière indépendante par rapport au régime moteur de la turbomachine avec laquelle elle est associée.

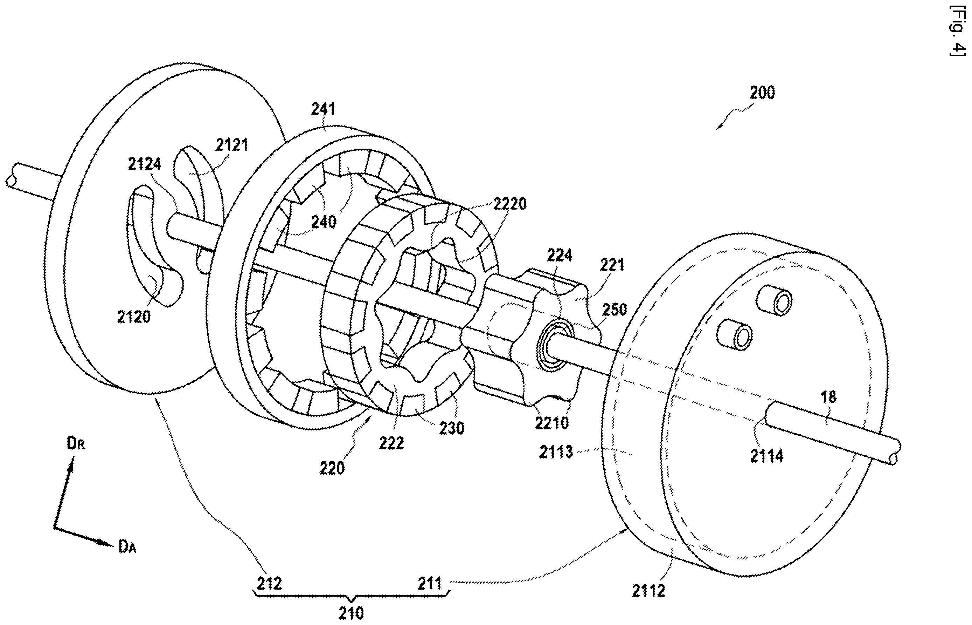

La figure 4 montre une pompe électromagnétique 200 conformément à un autre mode de réalisation de l'invention. Dans ce mode de réalisation, la pompe 200 est une pompe du type gérotor comprenant un corps de pompe fixe ou stator 210 constitué d'un carter 211 et d'un flasque 212. Le carter 211 comporte un logement interne 2113 délimité par une paroi externe 2112. Le flasque 212 comporte un port d'aspiration 2120 et un port de refoulement 2121.

La pompe électromagnétique 200 comprend également un rotor 220 comprenant un pignon intérieur 221 et une couronne extérieure 222. Le pignon intérieur 221 comprend une denture extérieure constituée ici de six dents 2210 tandis que la couronne extérieure 222 comprend une denture interne constituée ici de 7 dents 2220. Le pignon intérieur 221 comporte un palier 224. Des ouvertures 2114 et 2124 sont présentes respectivement sur le carter 211 et le flasque 212. Le palier 224 est destiné à coopérer avec une roue libre 250 formant ici l'élément d'embrayage unidirectionnel reliant l'arbre moteur 18 au rotor 220 de la pompe électromagnétique 200, les ouvertures 2114 et 2124 permettant le passage de l'arbre moteur 18.

Dans les pompes de type gérotor, un fluide est aspiré depuis le port 2120 et refoulé via le port 2121 par des capsules créées entre les dents 2210 et 2220 respectivement du pignon intérieur 221 et de la couronne extérieure 222 lors de la rotation de ces deux éléments.

La pompe électromagnétique 200 comprend encore une pluralité d'aimants permanents 230 répartis de manière annulaire sur la périphérie externe de la couronne extérieure 222 et une pluralité de bobines 240 réparties de manière annulaire à l'intérieur du corps de pompe fixe ou stator 210. Plus précisément, les bobines 240 sont maintenues sur la surface interne d'un anneau de support 241, l'ensemble bobines et anneau de support étant présents dans le logement interne 2113 du carter 211.

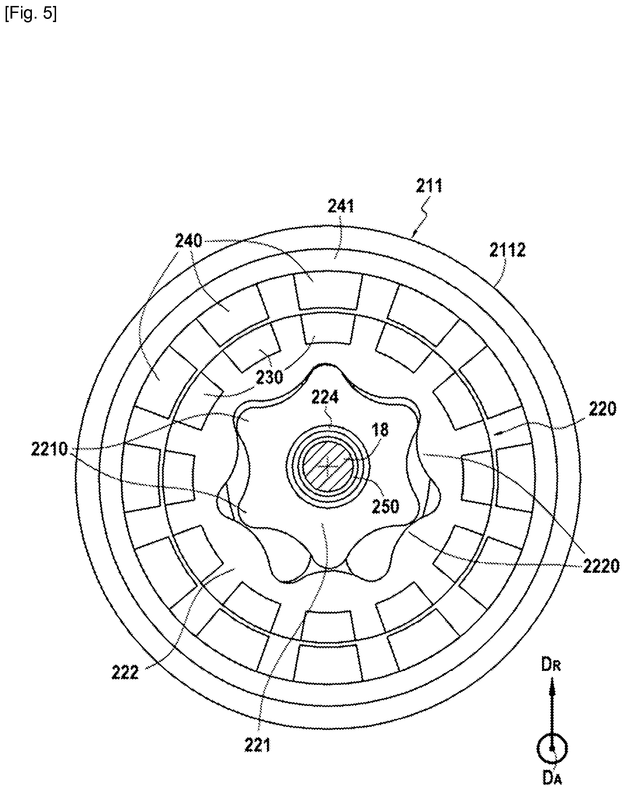

Une fois tous les éléments constitutifs de la pompe 200 assemblés, les aimants permanents 230 se trouvent en vis-à-vis des bobines 240 suivant une direction radiale D_{R} comme illustré sur la figure 5. Le pilotage de la pompe électromagnétique 200 (couple et vitesse de rotation) est réalisé par contrôle du courant circulant dans les bobines.

En fixant les aimants permanents directement 230 sur le pignon interne 221, on intègre une partie des moyens d'entraînement de la pompe directement au sein des éléments en mouvement, ce qui permet d'obtenir un haut niveau d'intégration des moyens d'entraînement et donc un encombrement réduit pour la pompe.

En outre, en plaçant la pluralité d'aimants permanents et la pluralité de bobines en vis-à-vis suivant la direction radiale, on optimise grandement l'encombrement radial de la pompe. On obtient ainsi une pompe très compacte qui peut être pilotée de manière indépendante par rapport au régime moteur de la turbomachine avec laquelle elle est associée.

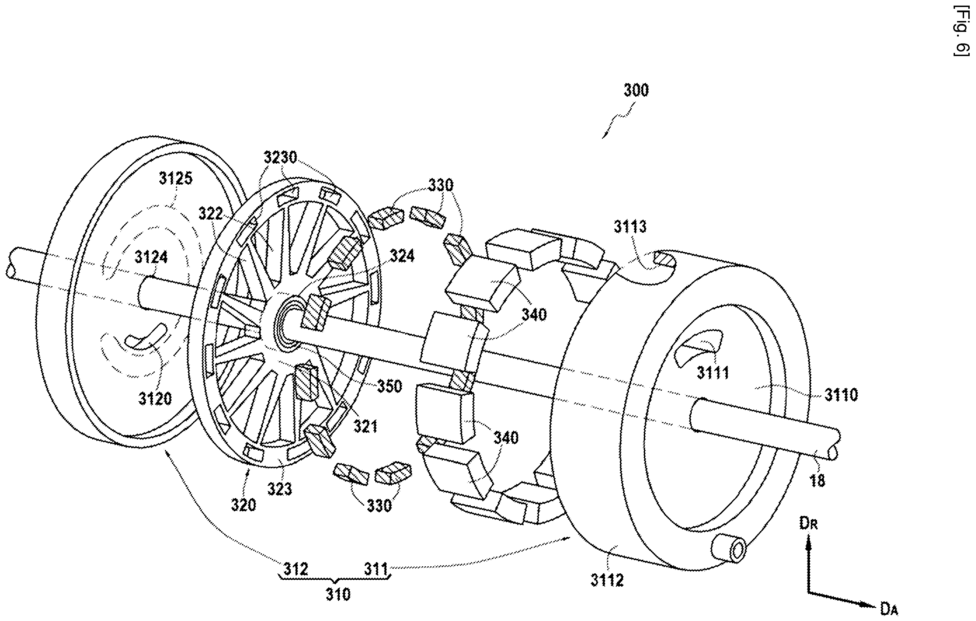

La figure 6 illustre une pompe électromagnétique 300 conformément à un autre mode de réalisation de l'invention. Dans l'exemple décrit ici, la pompe électromagnétique 300 est une pompe du type à anneau liquide comprenant un corps de pompe fixe ou stator 310 constitué d'un carter 311 et d'un flasque 312. Le carter 311 comporte une partie centrale cylindrique pleine 3110 munie d'un port d'aspiration/refoulement 3111 et une paroi externe circulaire 3112 s'étendant concentriquement autour de la partie centrale 3110, des logements annulaires 3113 étant délimités entre la partie centrale 1110 et la paroi externe 3112. Le flasque 312 comporte un port de refoulement/aspiration 3120.

La pompe électromagnétique 300 comprend également une roue à aubes ou rotor 320 comprenant une roue 321 muni d'une pluralité d'aubes 322 s'étendant depuis la roue suivant une direction radiale D_{R}, un anneau 323 étant présent au niveau de la périphérie externe de la roue. Dans l'exemple décrit ici, l'anneau 323 est fixé sur les extrémités radialement externes des aubes 322.

La roue à aubes 320 comporte un palier 324. Des ouvertures 3114 et 3124 sont présentes respectivement sur le demi-carter 311 et le demi-carter 312. Le palier 324 est destiné à coopérer avec une roue libre 350 formant ici l'élément d'embrayage unidirectionnel reliant l'arbre moteur 18 à la roue à aubes 320 de la pompe électromagnétique 300, les ouvertures 3114 et 3124 permettant le passage de l'arbre moteur 18. Le palier 324 est placé de façon excentrique sur la roue à aube 320 de manière à créer des variations de volume inter-aubes (ou inter-pales) qui permettent d'aspirer le fluide pompé, par exemple par le port 3111 puis de l'évacuer sous pression, par exemple par le port 3120. La pompe 300 peut être également une pompe à canal latéral, encore appelée pompe régénérative. Dans ce cas, un canal latéral 3125 (en pointillés sur la figure 6) présent ici sur le flasque 312 s'étend entre les ports 3111 et 3120. L'évolution des variations de volume inter-aubes (ou inter-pales), associée au champ de vitesse (vortex) présent dans le canal latéral 3125, permet d'aspirer le fluide, par exemple par le port 3111, puis de l'évacuer sous pression, par exemple par le port 3120. La pompe électromagnétique 300 comprend encore une pluralité d'aimants permanents 330 répartis de manière annulaire sur la roue à aube ou rotor 320 et une pluralité de bobines 340 réparties de manière annulaire à l'intérieur du corps de pompe fixe ou stator 310. Plus précisément, dans l'exemple décrit ici, les aimants permanents 330 sont maintenus dans des logements 3230 présents dans l'anneau 323 tandis que les bobines 340 sont maintenues dans le logement annulaire 3113 présents dans le carter 311.

Une fois tous les éléments constitutifs de la pompe 300 assemblés, les bobines 340 se trouvent en vis-à-vis des aimants permanents 330 suivant une direction axiale D_{A}. Le pilotage de la pompe électromagnétique 300 (couple et vitesse de rotation) est réalisé par contrôle du courant circulant dans les bobines.

En fixant les aimants permanents directement 330 sur la roue à aube 320, on intègre une partie des moyens d'entraînement de la pompe directement au sein des éléments en mouvement, ce qui permet d'obtenir un haut niveau d'intégration des moyens d'entraînement et donc un encombrement réduit pour la pompe.

En outre, en plaçant la pluralité d'aimants permanents et la pluralité de bobines en vis-à-vis suivant la direction axiale, on optimise grandement l'encombrement radial de la pompe. On obtient ainsi une pompe très compacte qui peut être pilotée de manière indépendante par rapport au régime moteur de la turbomachine avec laquelle elle est associée.

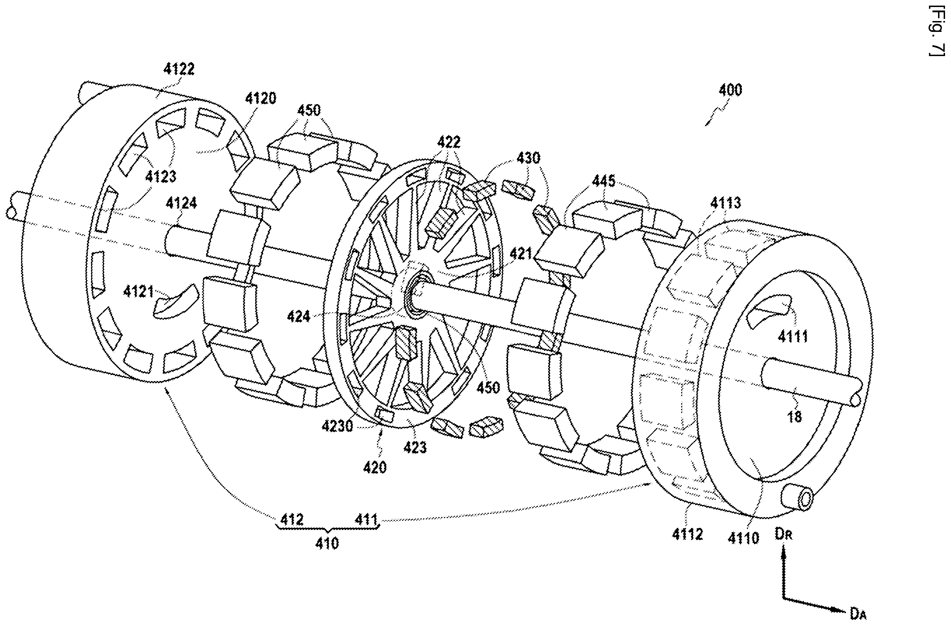

La figure 7 illustre un autre mode de réalisation d'une pompe électromagnétique 400 qui diffère de la pompe électromagnétique 300 décrite en relation avec la figure 6 en ce qu'elle comprend un double bobinage. Plus précisément, comme pour la pompe 300, la pompe 400 comprend une roue à aubes ou rotor 420 comprenant une roue 421 muni d'une pluralité d'aubes 422 s'étendant depuis la roue suivant une direction radiale D_{R}, un anneau 423 fixé sur les extrémités radialement externes des aubes 422.

La pompe électromagnétique 400 comprenant également un corps de pompe fixe ou stator 410 constitué d'un premier carter 411 et d'un deuxième carter 412. Les carters 411 et 412 comportent chacun respectivement une partie centrale cylindrique pleine 4110, 4120 munie d'un port d'aspiration/refoulement 4111, 4121 et une paroi externe circulaire 4112, 4122 s'étendant concentriquement autour de la partie centrale 4110, 4120. Des premiers logements annulaires 4113 sont délimités dans le premier carter 411 entre la partie centrale 4110 et la paroi externe 4112. Des deuxièmes logements annulaires 4123 sont délimités dans le deuxième carter 412 entre la partie centrale 4120 et la paroi externe 4122.

La pompe électromagnétique 400 comprend encore une pluralité d'aimants permanents 430 maintenus de manière annulaire dans des logements 4230 présents dans l'anneau 423 et des première et deuxième pluralités de bobines 440 et 445. La première pluralité de bobines 440 est répartie de manière annulaire dans les premiers logements annulaires 4113 tandis que la deuxième pluralité de bobines 445 est répartie de manière annulaire dans les deuxièmes logements annulaires 4123.

La roue à aubes 420 comporte un palier 424. Des ouvertures 4114 et 4124 sont présentes respectivement sur le demi-carter 411 et le demi-carter 412. Le palier 424 est destiné à coopérer avec une roue libre 450 formant ici l'élément d'embrayage unidirectionnel reliant l'arbre moteur 18 à la roue à aubes 420 de la pompe électromagnétique 400, les ouvertures 4114 et 4124 permettant le passage de l'arbre moteur 18.

Une fois la pompe 400 assemblée, les première et deuxième pluralités de bobines 440 et 445 sont présentes respectivement d'un côté et de l'autre côté de la roue 420 et en vis-à-vis des aimants suivant une direction axiale D_{A}.

En outre des avantages d'intégration et de compacité déjà énoncés ci-avant pour la pompe 300, la pompe électromagnétique 400 comprend deux pluralités de bobines qui permettent d'assurer une redondance en cas de panne ou de défaillance d'une pluralité de bobine, chaque pluralité de bobine ayant ses propres connexions au système de pilotage. La redondance de la pluralité de bobine peut également être utilisée pour doubler la puissance des champs électromagnétiques auxquels sont soumis les aimants permanents. On notera aussi que toujours dans un souci d'optimisation de l'encombrement de la pompe, seule la pluralité de bobine est redondée, et ce au plus près des aimants permanents.

La pompe 400 peut être également une pompe à canal latéral, encore appelée pompe régénérative comme expliqué précédemment en relation avec la pompe 300.

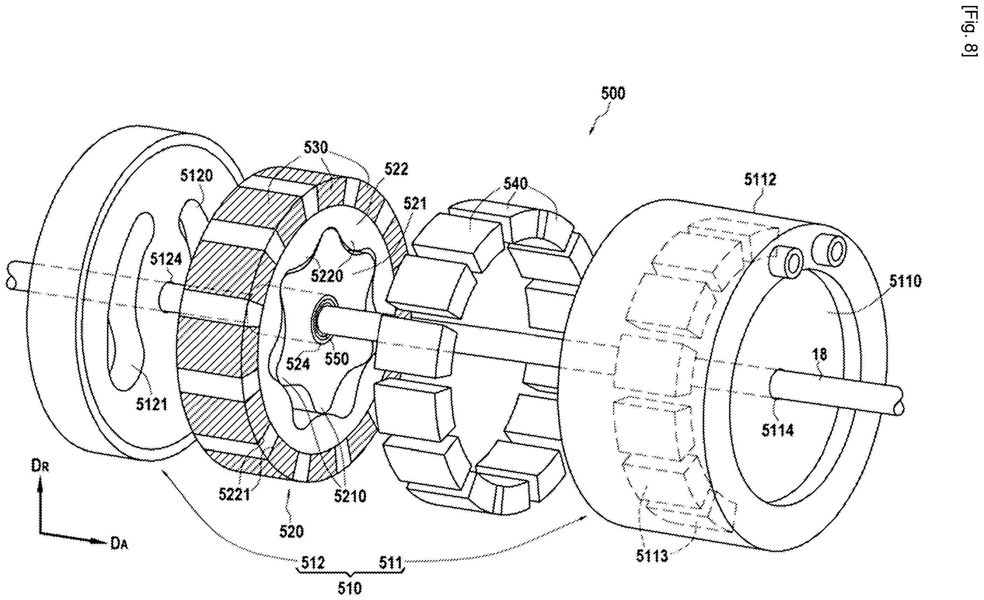

La figure 8 montre une pompe électromagnétique 500 conformément à un autre mode de réalisation de l'invention. Dans ce mode de réalisation, la pompe 500 est une pompe du type gérotor comprenant un corps de pompe fixe ou stator 510 constitué d'un carter 511 et d'un flasque 512. Le carter 511 comporte une partie centrale cylindrique pleine 5110 et une paroi externe circulaire 5112 s'étendant concentriquement autour de la partie centrale 5110, des logements annulaires 5113 étant délimités entre la partie centrale 5110 et la paroi externe 5112. Le flasque 512 comporte un port d'aspiration 5120 et un port de refoulement 5121.

La pompe électromagnétique 500 comprend également un rotor 520 comprenant un pignon intérieur 521 et une couronne extérieure 522 présente autour du pignon intérieur 521 suivant une direction radiale D_{R}. Le pignon intérieur comprend une denture extérieure constituée ici de six dents 5210 tandis que la couronne extérieure 522 comprend une denture interne constituée ici de 7 dents 5220.

Le pignon intérieur 521 comporte un palier 524. Des ouvertures 5114 et 5124 sont présentes respectivement sur le carter 511 et le flasque 512. Le palier 524 est destiné à coopérer avec une roue libre 550 formant ici l'élément d'embrayage unidirectionnel reliant l'arbre moteur 18 au rotor 520 de la pompe électromagnétique 500, les ouvertures 5114 et 5124 permettant le passage de l'arbre moteur 18.

Dans les pompes de type gérotor, un fluide est aspiré depuis le port 5120 et refoulé via le port 5121 par des capsules créées entre les dents 5210 et 5220 respectivement du pignon intérieur 521 et de la couronne extérieure 522 lors de la rotation de ces deux éléments.

La pompe électromagnétique 500 comprend encore une pluralité d'aimants permanents 530 répartis de manière annulaire sur la périphérie externe de la couronne extérieure 522 et une pluralité de bobines 540 réparties de manière annulaire à l'intérieur du corps de pompe fixe ou stator 510. Plus précisément, dans l'exemple décrit ici, les aimants permanents 530 sont maintenus dans des logements 5221 présents dans la couronne extérieure 522 tandis que les bobines 540 sont maintenues dans les logements annulaires 5113 présents dans le carter 511.

Une fois tous les éléments constitutifs de la pompe 500 assemblés, les bobines 540 se trouvent en vis-à-vis des aimants permanents 530 suivant une direction axiale D_{A}. Le pilotage de la pompe électromagnétique 500 (couple et vitesse de rotation) est réalisé par contrôle du courant circulant dans les bobines.

En fixant les aimants permanents directement 530 sur la couronne extérieure 522, on intègre une partie des moyens d'entraînement de la pompe directement au sein des éléments en mouvement, ce qui permet d'obtenir un haut niveau d'intégration des moyens d'entraînement et donc un encombrement réduit pour la pompe.

En outre, en plaçant la pluralité d'aimants permanents et la pluralité de bobines en vis-à-vis suivant la direction axiale, on optimise grandement l'encombrement radial de la pompe. On obtient ainsi une pompe très compacte qui peut être pilotée de manière indépendante par rapport au régime moteur de la turbomachine avec laquelle elle est associée.

La pompe électromagnétique 500 peut également être dotée d'un double bobinage comme décrit pour la pompe 400 de la figure 7. Dans ce cas, la pompe comprend une deuxième pluralité de bobines répartie de manière annulaire dans des logements présents le flasque 512.

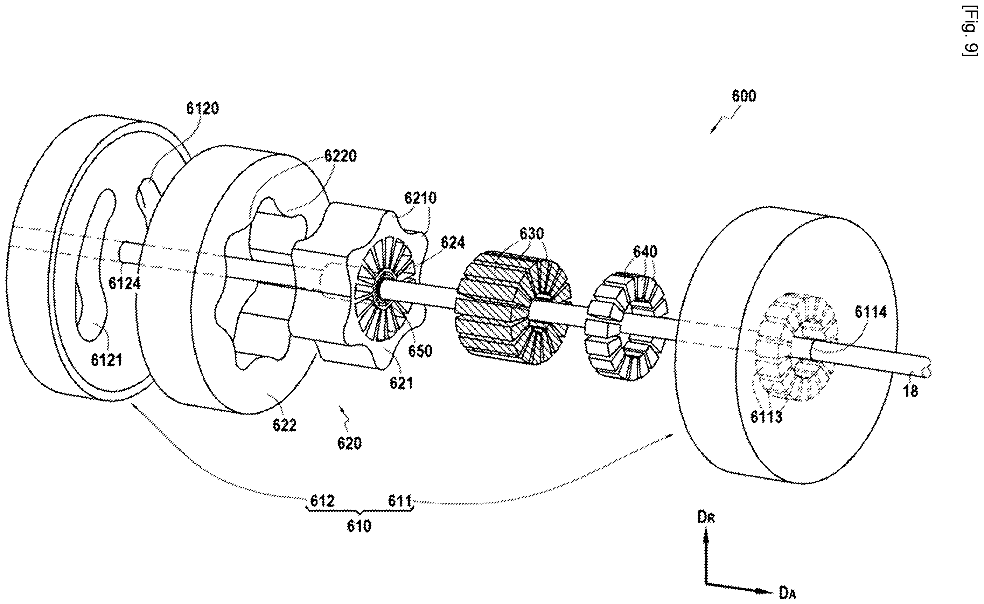

La figure 9 illustre un autre mode de réalisation d'une pompe électromagnétique 600 qui diffère de la pompe électromagnétique 500 décrite en relation avec la figure 8 en ce que les aimants permanents sont maintenus sur le pignon intérieur. Plus précisément, comme pour la pompe 500, la pompe 600 de type gérotor comprend un corps de pompe fixe ou stator 610 constitué d'un carter 611 et d'un flasque 612. Le carter 611 comporte des logements annulaires 6113. Le flasque 612 comporte un port d'aspiration 6120 et un port de refoulement 6121.

La pompe électromagnétique 600 comprend également un rotor 620 comprenant un pignon intérieur 621 et une couronne extérieure 622 présente autour du pignon intérieur 621 suivant une direction radiale D_{R}. Le pignon intérieur comprend une denture extérieure constituée ici de six dents 6210 tandis que la couronne extérieure 622 comprend une denture interne constituée ici de 7 dents 6220.

Le pignon intérieur 621 comporte un palier 624. Des ouvertures 6114 et 6124 sont présentes respectivement sur le carter 611 et le flasque 612. Le palier 624 est destiné à coopérer avec une roue libre 150 formant ici l'élément d'embrayage unidirectionnel reliant l'arbre moteur 18 au rotor 620 de la pompe électromagnétique 600, les ouvertures 6114 et 6124 permettant le passage de l'arbre moteur 18.

La pompe électromagnétique 600 comprend encore une pluralité d'aimants permanents 630 maintenus de manière annulaire dans le pignon intérieur 621 autour du palier 624 et une pluralité de bobines 640 maintenues dans les logements annulaires 6113 présents dans le carter 611.

Une fois tous les éléments constitutifs de la pompe 600 assemblés, les bobines 640 se trouvent en vis-à-vis des aimants permanents 630 suivant une direction axiale D_{A}. Le pilotage de la pompe électromagnétique 600 (couple et vitesse de rotation) est réalisé par contrôle du courant circulant dans les bobines.

En fixant les aimants permanents 630 directement sur le pignon intérieur 621, on intègre une partie des moyens d'entraînement de la pompe directement au sein des éléments en mouvement, ce qui permet d'obtenir un haut niveau d'intégration des moyens d'entraînement et donc un encombrement réduit pour la pompe.

En outre, en plaçant la pluralité d'aimants permanents et la pluralité de bobines en vis-à-vis suivant la direction axiale, on optimise grandement l'encombrement radial de la pompe. On obtient ainsi une pompe très compacte qui peut être pilotée de manière indépendante par rapport au régime moteur de la turbomachine avec laquelle elle est associée.

De même que pour les pompes décrites précédemment, la pompe électromagnétique 600 peut être équipée d'un double bobinage, à savoir comprendre des première et deuxième pluralités de bobines présentes respectivement d'un côté et de l'autre côté du pignon intérieur, les bobines des première et deuxième pluralités de bobines étant en vis-à-vis des aimants suivant la direction axiale.

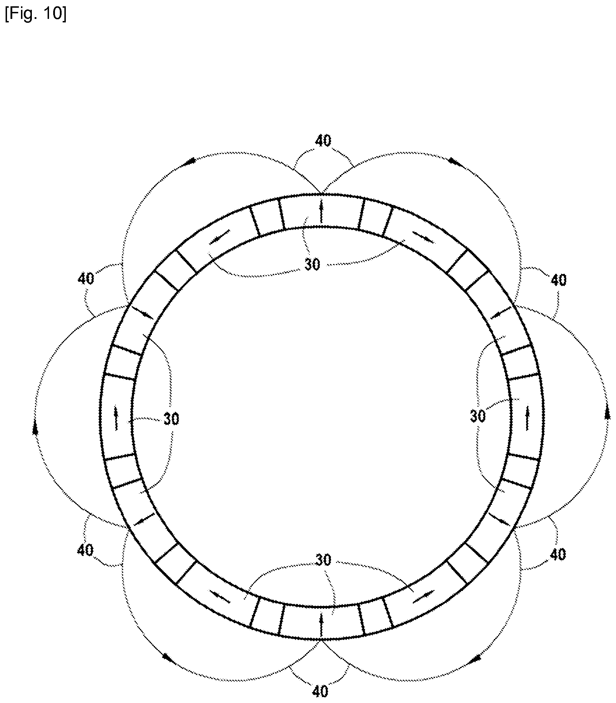

Selon une caractéristique additionnelle de l'invention, les aimants permanents présents sur les extrémités radialement externes des aubes de la roue à aube pour les modes de réalisation décrits ci-avant en relation avec les figures 2, 3, 6 et 7, ou sur la couronne extérieure pour les modes de réalisation décrits ci-avant en relation avec les figures 4, 5 et 8, ou sur la pignon intérieur pour le modes de réalisation décrit ci-avant en relation avec la figure 9 peuvent être disposés suivant une structure de Halbach. La figure 10 illustre un exemple de disposition des aimants permanents suivant une structure de Halbach. Dans cet exemple, des aimants permanents 30 sont répartis de manière annulaire comme dans les rotors décrits précédemment en inversant la polarité des aimants dans le sens radial et dans le sens circonférentiel comme représenté par les flèches indiquées sur la figure 10. Cette disposition particulière permet d'augmenter le champ magnétique 40 du côté externe du rotor tandis que le champ magnétique du côté interne du rotor est sensiblement annulé. On réduit ainsi la déperdition du champ magnétique, ce qui améliore le pilotage du rotor par les bobines.

L'élément d'embrayage unidirectionnel, comme par exemple la roue libre décrite ci-avant, permet de coupler sélectivement le rotor de la pompe électromagnétique à l'arbre moteur utilisé pour entraîner la pompe centrifuge. Il est ainsi possible d'utiliser la pompe électromagnétique selon plusieurs modes de fonctionnement dans la turbomachine.

Un premier mode de fonctionnement correspond à l'amorçage du circuit d'alimentation en carburant de la turbomachine lorsque le moteur est éteint. A ce stade, le circuit d'alimentation en carburant peut contenir de l'air à la suite d'une vidange totale ou partielle du circuit d'alimentation entre le réservoir et la chambre de combustion de la turbomachine. La présence d'air diminue significativement les capacités d'aspiration de la pompe centrifuge, ce qui peut même empêcher le démarrage du moteur. Une solution connue de l'art antérieur consiste à munir le réservoir d'une pompe d'amorçage, dite « pompe de gavage », qui permet de remplir le circuit d'alimentation entre le réservoir et le moteur. Cependant, la mise en œuvre d'une pompe de gavage dans un réservoir est complexe et augmente la masse de l'ensemble alors que la pompe ne sert que pour un éventuel amorçage avant le démarrage du moteur.

Conformément à l'invention, l'amorçage du circuit d'alimentation en carburant est réalisé en commandant la pompe électromagnétique à partir d'une source d'énergie électrique indépendante afin de remplir le circuit d'alimentation de carburant avant le démarrage du moteur. Dans ce premier mode de fonctionnement, dit « mode d'amorçage », le rotor de la pompe électromagnétique tourne librement autour de l'arbre moteur qui est immobile grâce à la présence de l'élément d'embrayage unidirectionnel interposé entre le rotor et l'arbre moteur.

Un deuxième mode de fonctionnement, dit « mode boost », est mis en œuvre alors que le moteur est allumé et que la pompe centrifuge est entraînée par l'arbre moteur. Dans ce mode, le rotor de la pompe électromagnétique est entraîné à partir d'une source d'énergie électrique indépendante à une vitesse supérieure à la vitesse de rotation de l'arbre moteur, ce qui permet d'apporter une capacité de pompage supplémentaire à la pompe centrifuge. Le moyen d'embrayage unidirectionnel permet au rotor de la pompe électromagnétique de tourner à une vitesse supérieure à la vitesse de rotation de l'arbre moteur.

Un troisième mode de fonctionnement, dit « mode générateur », est mis en œuvre alors que le moteur est allumé et que la pompe centrifuge est entraînée par l'arbre moteur. La pompe électromagnétique n'est pas alimentée par une source d'énergie électrique mais son rotor est entraîné en rotation par l'arbre moteur grâce à la présence de l'élément d'embrayage unidirectionnel interposé entre le rotor et l'arbre moteur. Dans ce mode, la pompe électromagnétique se transforme alors en générateur électrique pour produire un courant électrique qui peut être prélevé dans les bobines de la pompe et stocké dans des batteries pour être ultérieurement utilisé, par exemple pour commander la pompe électromagnétique dans les premier et deuxième modes de fonctionnement.

## Revendications

1. Circuit d'alimentation en carburant (1) d'un moteur d'aéronef reliant un réservoir de carburant (10) à une chambre de combustion (21) d'une turbomachine, comprenant au moins une pompe centrifuge basse pression (11) couplée mécaniquement avec un arbre moteur (18), **caractérisé en ce qu'**il comprend en outre au moins une pompe électromagnétique (100) comprenant au moins un stator (110) délimitant un volume interne annulaire dans lequel est présent un rotor (120) apte à entraîner un fluide, une pluralité d'aimants (130) répartis de manière annulaire sur le rotor (120) et au moins une pluralité de bobines (140) réparties de manière annulaire à l'intérieur du stator (110) en vis-à-vis des aimants (130) et **en ce que** le rotor (120) est relié à l'arbre moteur (18) par un élément d'embrayage unidirectionnel (150), l'entrée des pompes (11, 100) étant reliée au réservoir de carburant (10) et la sortie des pompes (11, 100) étant reliée à la chambre de combustion (21) de la turbomachine de sorte que la turbomachine peut être alimentée en carburant par la pompe centrifuge basse pression (11), ou par la pompe électromagnétique (100), ou par les deux pompes (11, 100) simultanément.

2. Circuit selon la revendication 1, dans lequel le rotor (120) comprend une roue (121) munie d'une pluralité d'aubes (122), les aimants de la pluralité d'aimants (130) étant maintenus au niveau des extrémités radialement externes des aubes de la roue, les bobines de la pluralité de bobines (140) étant en vis-à-vis des aimants de la pluralité d'aimants (130) suivant une direction radiale (D_{R}).

3. Circuit selon la revendication 1, dans lequel le rotor (220) comprend un pignon intérieur (221) coopérant avec une couronne extérieure (222) à denture intérieure, les aimants de la pluralité d'aimants (230) étant maintenus au niveau de la périphérie externe de la couronne extérieure (222), les bobines de la pluralité de bobines (240) étant en vis-à-vis des aimants de la pluralité d'aimants (230) suivant une direction radiale (D_{R}).

4. Circuit selon la revendication 1, dans lequel le rotor (320) comprend une roue (321) munie d'une pluralité d'aubes (322), les aimants de la pluralité d'aimants (330) étant maintenus au niveau de la périphérie externe de la roue, les bobines de la pluralité de bobines (340) étant en vis-à-vis des aimants (330) suivant une direction axiale (D_{A}).

5. Circuit selon la revendication 4, dans lequel chaque pompe électromagnétique (400) comprend des première et deuxième pluralités de bobines (440, 450) présentes respectivement d'un côté et de l'autre côté de la roue (421), les bobines des première et deuxième pluralités de bobines étant en vis-à-vis des aimants suivant la direction axiale (D_{A}).

6. Circuit selon la revendication 1, dans lequel le rotor (520) comprend un pignon intérieur (521) coopérant avec une couronne extérieure (522) à denture intérieure, les aimants de la pluralité d'aimants (530) étant maintenus au niveau de la périphérie externe de la couronne extérieure, les bobines de la pluralité de bobines (540) étant en vis-à-vis des aimants (530) suivant une direction axiale (D_{A}).

7. Circuit selon la revendication 6, dans lequel chaque pompe électromagnétique (400) comprend des première et deuxième pluralités de bobines (440, 450) présentes respectivement d'un côté et de l'autre côté de la couronne extérieure (422), les bobines des première et deuxième pluralités de bobines (440, 450) étant en vis-à-vis des aimants (430) suivant la direction axiale (D_{A}).

8. Circuit selon la revendication 1, dans lequel le rotor (620) comprend un pignon intérieur (621) coopérant avec une couronne extérieure (622) à denture intérieure, les aimants de la pluralité d'aimants (630) étant maintenus sur le pignon intérieur (621), les bobines de la pluralité de bobines (640) étant en vis-à-vis des aimants (630) suivant une direction axiale (D_{A}).

9. Circuit selon la revendication 8, dans lequel chaque pompe électromagnétique comprend des première et deuxième pluralités de bobines présentes respectivement d'un côté et de l'autre côté du pignon, les bobines des première et deuxième pluralités de bobines étant en vis-à-vis des aimants suivant la direction axiale (D_{A}).

10. Circuit selon l'une quelconque des revendications 1 à 9, dans lequel chaque pompe électromagnétique est apte à générer un courant électrique.

11. Moteur d'aéronef comportant un circuit d'alimentation en carburant selon l'une quelconque des revendications 1 à 10.

12. Utilisation du circuit d'alimentation en carburant selon l'une quelconque des revendications 1 à 10 pour l'alimentation en carburant d'un moteur d'aéronef, ledit circuit étant relié à un réservoir de carburant dépourvu de pompe d'amorçage.

## Patentansprüche

1. Kraftstoffversorgungsschaltung (1) eines Flugzeugtriebwerks, die einen Kraftstoffbehälter (10) mit einer Brennkammer (21) einer Turbomaschine verbindet und mindestens eine mechanisch mit einer Motorwelle (18) gekoppelte Niederdruck-Kreiselpumpe (11) umfasst, **dadurch gekennzeichnet, dass** sie ferner mindestens eine elektromagnetische Pumpe (100) umfasst, die mindestens einen Stator (110) aufweist, der ein inneres ringförmiges Volumen begrenzt, in welchem ein Rotor (120) angeordnet ist, der geeignet ist, ein Fluid anzutreiben, wobei eine Mehrzahl von Magneten (130) ringförmig auf dem Rotor (120) verteilt ist und wobei eine Mehrzahl von Spulen (140) ringförmig innerhalb des Stators (110) gegenüber den Magneten (130) angeordnet ist, und dass der Rotor (120) über ein unidirektionales Kupplungselement (150) mit der Motorwelle (18) verbunden ist, wobei der Einlass der Pumpen (11, 100) mit dem Kraftstoffbehälter (10) verbunden ist und der Auslass der Pumpen (11, 100) mit der Brennkammer (21) der Turbomaschine verbunden ist, derart, dass die Turbomaschine durch die Niederdruck-Kreiselpumpe (11), durch die elektromagnetische Pumpe (100) oder durch beide Pumpen (11, 100) gleichzeitig mit Kraftstoff versorgbar ist.

2. Schaltung nach Anspruch 1, bei der der Rotor (120) ein Rad (121) umfasst, das mit einer Mehrzahl von Schaufeln (122) versehen ist, wobei die Magnete der Mehrzahl von Magneten (130) an den radial äußeren Enden der Schaufeln des Rads gehalten sind, und wobei die Spulen der Mehrzahl von Spulen (140) den Magneten der Mehrzahl von Magneten (130) gemäß einer radialen Richtung (D_{R}) gegenüberliegen.

3. Schaltung nach Anspruch 1, bei der der Rotor (220) ein Innenritzel (221) umfasst, das mit einem Außenkranz (222) mit Innenverzahnung zusammenwirkt, wobei die Magnete der Mehrzahl von Magneten (230) an der äußeren Peripherie des Außenkranzes (222) gehalten sind, und wobei die Spulen der Mehrzahl von Spulen (240) den Magneten der Mehrzahl von Magneten (230) gemäß einer radialen Richtung (D_{R}) gegenüberliegen.

4. Schaltung nach Anspruch 1, bei der der Rotor (320) ein Rad (321) umfasst, das mit einer Mehrzahl von Schaufeln (322) versehen ist, wobei die Magnete der Mehrzahl von Magneten (330) an der äußeren Peripherie des Rads gehalten sind, und wobei die Spulen der Mehrzahl von Spulen (340) den Magneten der Mehrzahl von Magneten (330) entlang einer axialen Richtung (D_{A}) gegenüberliegen.

5. Schaltung nach Anspruch 4, bei der jede elektromagnetische Pumpe (400) erste und zweite Mehrzahlen von Spulen (440, 450) umfasst, die jeweils auf der einen Seite und auf der anderen Seite des Rads (421) angeordnet sind, wobei die Spulen der ersten und zweiten Mehrzahlen von Spulen den Magneten entlang der axialen Richtung (D_{A}) gegenüberliegen.

6. Schaltung nach Anspruch 1, bei der der Rotor (520) ein Innenritzel (521) umfasst, das mit einem Außenkranz (522) mit Innenverzahnung zusammenwirkt, wobei die Magnete der Mehrzahl von Magneten (530) an der äußeren Peripherie des Außenkranzes gehalten sind, und wobei die Spulen der Mehrzahl von Spulen (540) den Magneten (530) entlang einer axialen Richtung (D_{A}) gegenüberliegen.

7. Schaltung nach Anspruch 6, bei der jede elektromagnetische Pumpe (400) erste und zweite Mehrzahlen von Spulen (440, 450) umfasst, die jeweils auf der einen Seite und auf der anderen Seite des Außenkranzes (422) angeordnet sind, wobei die Spulen der ersten und zweiten Mehrzahlen von Spulen (440, 450) den Magneten (430) entlang der axialen Richtung (D_{A}) gegenüberliegen.

8. Schaltung nach Anspruch 1, bei der der Rotor (620) ein Innenritzel (621) umfasst, das mit einem Außenkranz (622) mit Innenverzahnung zusammenwirkt, wobei die Magnete der Mehrzahl von Magneten (630) auf dem Innenritzel (621) gehalten sind, und wobei die Spulen der Mehrzahl von Spulen (640) den Magneten (630) entlang einer axialen Richtung (D_{A}) gegenüberliegen.

9. Schaltung nach Anspruch 8, bei der jede elektromagnetische Pumpe erste und zweite Mehrzahlen von Spulen umfasst, die jeweils auf der einen Seite und auf der anderen Seite des Ritzels angeordnet sind, wobei die Spulen der ersten und zweiten Mehrzahlen von Spulen den Magneten entlang der axialen Richtung (D_{A}) gegenüberliegen.

10. Schaltung nach einem der Ansprüche 1 bis 9, bei der jede elektromagnetische Pumpe geeignet ist, einen elektrischen Strom zu erzeugen.

11. Flugzeugtriebwerk mit einer Kraftstoffversorgungsschaltung nach einem der Ansprüche 1 bis 10.

12. Verwendung der Kraftstoffversorgungsschaltung nach einem der Ansprüche 1 bis 10 zur Kraftstoffversorgung eines Flugzeugtriebwerks, wobei die genannte Schaltung mit einem Kraftstoffbehälter verbunden ist, der keine Anlaufpumpe aufweist.

## Claims

1. A fuel supply circuit (1) of an aircraft engine connecting a fuel reservoir (10) to a combustion chamber (21) of a turbomachine, comprising at least one low-pressure centrifugal pump (11) mechanically coupled with an engine shaft (18), **characterized in that** it further comprises at least one electromagnetic pump (100) comprising at least one stator (110) delimiting an annular internal volume in which is present a rotor (120) able to drive a fluid, a plurality of magnets (130) annularly distributed on the rotor (120) and at least a plurality of coils (140) annularly distributed inside the stator (110) face-to-face with the magnets (130) and **in that** the rotor (120) is connected to the engine shaft (18) by a one-way clutching element (150), the inlet of the pumps (11, 100) being connected to the fuel reservoir (10) and the outlet of the pumps (11, 100) being connected to the combustion chamber (21) of the turbomachine such that the turbomachine can be supplied with fuel by the low-pressure centrifugal pump (11), or by the electromagnetic pump (100), or by both pumps (11, 100) simultaneously.

2. The circuit as claimed in claim 1, wherein the rotor (120) comprises a wheel (121) equipped with a plurality of vanes (122), the magnets of the plurality of magnets (130) being retained at the level of the radially outer ends of the vanes of the wheel, the coils of the plurality of coils (140) being face-to-face with the magnets of the plurality of magnets (130) along a radial direction (D_{R}).

3. The circuit as claimed in claim 1, wherein the rotor (220) comprises an inner pinion (221) interacting with an outer ring (222) with an inner toothing, the magnets of the plurality of magnets (230) being retained at the level of the outer periphery of the outer ring (222), the coils of the plurality of coils (240) being face-to-face with the magnets of the plurality of magnets (230) along a radial direction (D_{R}).

4. The circuit as claimed in claim 1, wherein the rotor (320) comprises a wheel (321) provided with a plurality of vanes (322), the magnets of the plurality of magnets (330) being retained at the level of the outer periphery of the wheel, the coils of the plurality of coils (340) being face-to-face with the magnets (330) along an axial direction (D_{A}).

5. The circuit as claimed in claim 4, wherein each electromagnetic pump (400) comprises first and second pluralities of coils (440, 450) present on either side of the wheel (421) respectively, the coils of the first and second pluralities of coils being face-to-face with the magnets along the axial direction (D_{A}).

6. The circuit as claimed in claim 1, wherein the rotor (520) comprises an inner pinion (521) interacting with an outer ring (522) with an inner toothing, the magnets of the plurality of magnets (530) being retained at the level of the outer periphery of the outer ring, the coils of the plurality of coils (540) being face-to-face with the magnets (530) along an axial direction (D_{A}).

7. The circuit as claimed in claim 6, wherein each electromagnetic pump (400) comprises first and second pluralities of coils (440, 450) present on either side of the outer ring (422) respectively, the coils of the first and second pluralities of coils (440, 450) being face-to-face with the magnets (430) along the axial direction (D_{A}).

8. The circuit as claimed in claim 1, wherein the rotor (620) comprises an inner pinion (621) interacting with an outer ring (622) with an inner toothing, the magnets of the plurality of magnets (630) being retained on the inner pinion (621), the coils of the plurality of coils (640) being face-to-face with the magnets (630) along an axial direction (D_{A}).

9. The circuit as claimed in claim 8, wherein each electromagnetic pump comprises first and second pluralities of coils present on either side of the pinion respectively, the coils of the first and second plurality of coils being face-to-face with the magnets along the axial direction (D_{A}).

10. The circuit as claimed in any of claims 1 to 9, wherein each electromagnetic pump is able to generate an electrical current.

11. An aircraft engine including a fuel supply circuit as claimed in any of claims 1 to 10.

12. A use of the fuel supply circuit as claimed in any of claims 1 to 10 for the fuel supply of an aircraft engine, said circuit being connected to a fuel reservoir without any priming pump.
